Europäisches Patentamt

(19) European Patent Office

Office européen des brevets

(11) Publication number: **0 037 817**
**B1**

(12) # EUROPEAN PATENT SPECIFICATION

(45) Date of publication of patent specification: 04.07.84

(51) Int. Cl.³: **H 01 M 10/04, H 01 M 2/22**

(21) Application number: **80901853.4**

(22) Date of filing: **08.10.80**

(86) International application number:
**PCT/GB80/00157**

(87) International publication number:
**WO 81/01075 16.04.81 Gazette 81/9**

(54) **ELECTRIC STORAGE BATTERIES.**

(30) Priority: **08.10.79 GB 7934793**

(43) Date of publication of application:
**21.10.81 Bulletin 81/42**

(45) Publication of the grant of the patent:
**04.07.84 Bulletin 84/27**

(84) Designated Contracting States:
**FR**

(56) References cited:
**DE - A - 1 671 875**
**DE - A - 2 333 788**
**FR - A - 1 246 427**
**FR - A - 2 229 144**
**FR - A - 2 275 894**
**FR - A - 2 312 122**
**FR - A - 2 339 257**
**GB - A - 2 041 632**
**US - A - 3 311 509**
**US - A - 3 350 237**
**US - A - 3 862 861**
**US - A - 4 051 304**

(73) Proprietor: **CHLORIDE GROUP PUBLIC LIMITED
COMPANY**
**52 Grosvenor Gardens**
**London SW1W 0AU (GB)**

(72) Inventor: **PEARSON, Ernest James**
**134 Manchester Road**
**Swinton, Manchester (GB)**

(74) Representative: **Jennings, Nigel Robin et al,
KILBURN & STRODE 30 John Street
London WC1N 2DD (GB)**

Courier Press, Leamington Spa, England.

## Description

### Technical Field

The present invention relates to electric storage batteries and in particular, though not exclusively, to lead acid storage batteries, and is particularly concerned with such batteries of so called "sealed" or "recombinant" type in which the amount of electrolyte present is restricted so that there is substantially no free unabsorbed electrolyte in the cells, and the gases evolved during operation or charging are induced to recombine within the battery.

### Background Art

Recombinant batteries are known, but it is an object of the invention to provide an economical battery structure which may be easily assembled and in which intercell ionic leakage currents do not occur. FR—A—2312122 discloses a battery comprising a plurality of separate adjacent cells having abutting walls which are sealed to respective cell lids and in which cooperating holes are formed. Connectors electrically connected to the positive plates in one cell and the negative plates in the adjacent cell extend up their respective abutting cell walls and are bent through the apertures and are there welded together to form an intercell connection. Respective ring seals extend around the apertures in the cell walls and are pressed against the walls by the respective connectors to form a seal therewith thereby preventing the free aqueous electrolyte passing from cell to cell.

### Disclosure of the Invention

According to the present invention an electric storage battery has a compartment containing two cells separated from one another by an intercell partition, each cell comprising at least one positive electrode and at least one negative electrode separated from each other by separators of absorbent fibrous material and containing substantially no free unabsorbed electrolyte, the positive plates of one cell being connected to the negative plates of the other cell by an intercell connector which passes over or through the intercell partition and is not sealed thereto, in which the intercell connector is provided with an electrolyte creepage barrier.

It has been found that, contrary to conventional teaching, in recombinant batteries containing substantially no free unabsorbed electrolyte the intercell partitions do not need to be sealed to the battery lid in order to prevent the battery failing prematurely due to ionic intercell leakage.

In the preferred embodiment of the invention the electrodes and separators of each cell are within a respective plastics bag, the material of the plastics bags constituting the intercell partition. In this embodiment such an intercell partition is not sealed to the battery lid and the intercell connector merely passes over the intercell partition and is not sealed to it. The battery's performance is not significantly impaired because intercell ionic leakage is not a serious problem in recombinant reduced electrolyte batteries.

It is however believed that with the passage of time the surface of the plate straps and intercell connectors of such batteries, which are typically of lead or lead alloy, will become somewhat corroded by the action of the electrolyte and that this surface will therefore become somewhat granular and porous. This granular surface will provide a wicking path for electrolyte by virtue of capillary effects, that is to say that electrolyte will pass up the plates and along the plate straps and intercell connectors and will then constitute an electrolyte path for intercell ionic leakage.

The provision in accordance with the invention of an electrolyte creepage barrier above the intercell partition ensures that although wicking of electrolyte may occur along the plate straps, the electrolyte path is interrupted by the electrolyte creepage barrier so that ionic leakage currents can not pass from one cell to the other.

The electrolyte creepage barrier may take many forms and may even comprise a non-corrodible metallic sheath extending around and sealed to the intercell connector. However, in a preferred form of the invention the creepage barrier comprises a ring of plastics material moulded around the intercell connector. Such a ring may be applied by means of a four-part mould, and it will be appreciated that it is important that the ring of plastics material be substantially sealed to the intercell connector so as to prevent electrolyte wicking through a gap between the intercell connectgor and the creepage barrier. In a further preferred form of the invention the creepage barrier comprises a film of organic material extending around the intercell connector. Such a film may be applied by inverting the battery after the plate straps have been formed and dipping them and the intercell connector into a bath of organic liquid such as epoxy resin or a laquer so as to leave them coated with the material which subsequently hardens. The creepage barriers may be applied by any convenient means, such as with a four-part mould when the plate strap is in position, or by moulding it around preformed plate straps which are subsequently connected to the plate lugs. The creepage barriers form an electrolyte-tight seal with the intercell connectors, but it will be appreciated that their external shape may be varied at will. Preferably, however, the battery is inverted immediately after formation of the plate straps and the latter are dipped whilst still hot into a fluidised bed of epoxy resin powder incorporating a curing agent. The epoxy dust sticks to the hot surface of the plate straps and cures to form an impervious layer but does not stick to the other components of the battery which are cold.

As mentioned above the cells contain essentially no free unabsorbed electrolyte, and in the most preferred condition of the cells the amount of electrolyte is not sufficient to saturate the pores in the electrodes and in the separators. The electrolyte absorption ratio of the separator material is preferably greater than 100%.

Electrolyte absorption ratio is the ratio, as a percentage, of the volume of electrolyte absorbed by the wetted portion of the separator material to the dry volume of that portion of the separator material which is wetted, when a strip of the dry separator material is suspended vertically above a body of aqueous sulphuric acid electrolyte of 1.270 SG containing 0.01% weight sodium lauryl sulphonate with 1 cm of the lower end of the strip immersed in the electrolyte, after a steady state wicking condition has been reached at 20°C at a relative humidity of less than 50%.

The thickness measurement for the electrolyte absorption ratio measurement is carried out with a micrometer at a loading of 10 kilopascals (1.45 psi) and a foot area of 200 square millimetres (in accordance with the method of British Standard Specification No. 3989).

We also prefer that the separator material should have a wicking height of at least 5 cm on the above test, namely that the electrolyte should have risen to a height of at least 5 cms above the surface of the electrolyte into which the strip of separator material dips when the steady state condition has been reached.

We find that these two requirements are met by fibrous blotting paper like materials made from fibres having diameters in the range 0.01 microns, or less, up to 10 microns, the average of the diameters of the fibres being less than 10 microns and preferably less than 5 microns, the weight to fibre density ratio, namely the ratio of the weight of the fibrous material in grams/square metre to the density in grams/cubic centimetre of the material from which the individual fibres are made preferably being at least 20 preferably 30 and especially 50.

This combination of properties gives a material which is highly resistant to "treeing through", namely growth of lead dendrites from the positive electrode of a lead acid battery to the negative electrode producing short circuits, whilst at the same time, even when containing large amounts of absorbed electrolyte, still providing a substantial degree of gas transmission capability.

The amount of electrolyte added is typically in the range 7 to 12 cm³ of sulphuric acid of 1.270 SG per cell in the discharged state of the cell, per Amphere hour of capacity of the cell.

Recombinant lead acid batteries operate under superatmospheric pressure e.g. from 1.1 bars upwards and due to the restricted amount of electrolyte, the high electrolyte absorption ratio of the separator, and there being at least as much negative active material capacity as positive active material capacity and the higher electrochemical efficiency of the negative electrode, the cell operates under the so-called "oxygen cycle" in which oxygen during charging or overcharging at the positive is transported, it is believed, through the gas phase in the separator to the surface of the negative which is damp with sulphuric acid and there recombines with the lead to form lead oxide which is converted to lead sulphate by the sulphuric acid. Loss of water is thus avoided as is excess gas pressure inside the cell. If the charging conditions generate oxygen at a faster rate than it can be transported to the negative and react thereat, then the excess oxygen is vented from the cell.

The amount of electrolyte added is not highly critical since it is observed that if a slight excess of electrolyte is added above that required to saturate the porosity of the cell components the recombination mechanism is suppressed and electrolyte is lost by electrolysis until the electrolyte volume has reached the correct amount for the cell in question, i.e. the cell porosity has reached the correct degree of unsaturation, when the recombination mechanism comes into operation again and a steady state recombination condition related to the rate of charging which is used is established.

The electrodes may be spirally wound or prismatic, e.g. of cast, cast and rolled, rolled and punched or expanded rectilinear form. The prismatic electrodes may be folded and interleaved or arranged in a zig-zag interleaved relationship.

Conventional grid alloys may be used to make the electrodes but for the folded or wound embodiments, softer materials such as pure lead or lead/calcium alloys e.g. with up to 0.1% calcium and optionally up to 1.0% tin are preferred.

Gas venting means are preferably provided in the form of a non-return valve so that air cannot obtain access to the interior of the battery although gas generated therein can escape to atmosphere.

The intercell partition must resist degradation by the electrolyte. Thus it may be polyethylene or polypropylene or polyvinyl chloride film for a lead acid battery, and may have a thickness of less than 0.25 mm (0.010 inches).

The invention may be put into practice in various ways and two specific embodiments will be described by way of example to illustrate the invention with reference to the accompanying diagrammatic drawings.

Brief Description of the Drawings

Figure 1 is a perspective view of a recombinant multicell battery having flat plates in accordance with the present invention with one corner cut away;

Figure 2 is a electron scanning photomicrograph of a preferred separator material at 1000 fold magnification; and

Figure 3 is a view similar to Figure 2 at 4000 fold magnification.

Best Mode of Carrying out the Invention

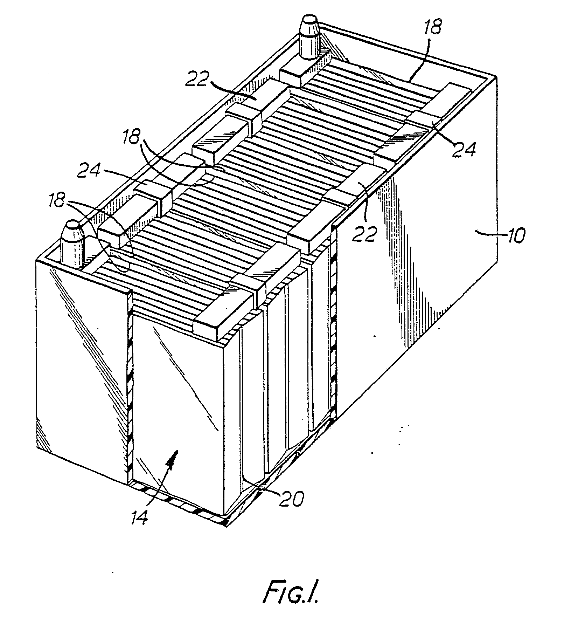

Referring first to Figure 1, the battery has a container 10 of plastics material such as polypropylene containing six cell packs 14. A cell pack is made up by assembling a stack of positive and negative plates, each of which has a plate lug, interleaved with compressible absorbent microfine glass material which will be described in more detail below. The stack is then inserted into a plastics bag 18, of for instance polypropylene which is seamed at 20. The plastics bag extends up above the plates and separators, but not as far as the tops of the plate lugs. Six such cell packs are slid into the container, and the relatively low coefficient of friction between the bags and the container enables the cell packs to be a relatively tight fit in the container, thus ensuring intimate contact between the plates and the separators. The container has no fixed intercell partitions and the plastics bags 18 serve the function of the partitions. As mentioned above the plastics bags extend above the tops of the separators and plates and this is important since it ensures that the separator material in adjacent cells cannot come into contact.

The negative and positive plates within each cell pack are connected together by respective plate straps 22 which are fused to the plate lugs in any conventional manner. Every alternate plate strap passes over an intercell partition constituted by the wall of two plastics bags to form an intercell connector in the usual manner.

As will be seen the plate straps 22 are of rectangular section, and at the portion where they form intercell connectors, that is to say where they pass over the intercell partitions, they are each provided with an electrolyte creepage barrier 24 extending about 1 cm along the plate straps/intercell connectors and about 5 mm thick, their external shape corresponding, to that of the plate straps.

A reduced amount of electrolyte is added to each cell, either prior to sealing, e.g. hot plate welding a lid to the container or after such sealing, e.g. by injecting through holes in the lid. It is not critical if the bags should extend slightly above the plate lugs, since the flexible plastics material will simply be depressed by the mould in which the plate straps are formed, or by the plate straps themselves.

The electrode supports are cast prismatic grids made from a lead, 0.07% calcium, 0.7% tin alloy. The grids are 1.2 mm thick and are rigid and self supporting and resist deformation even under load. They have good creep resistance.

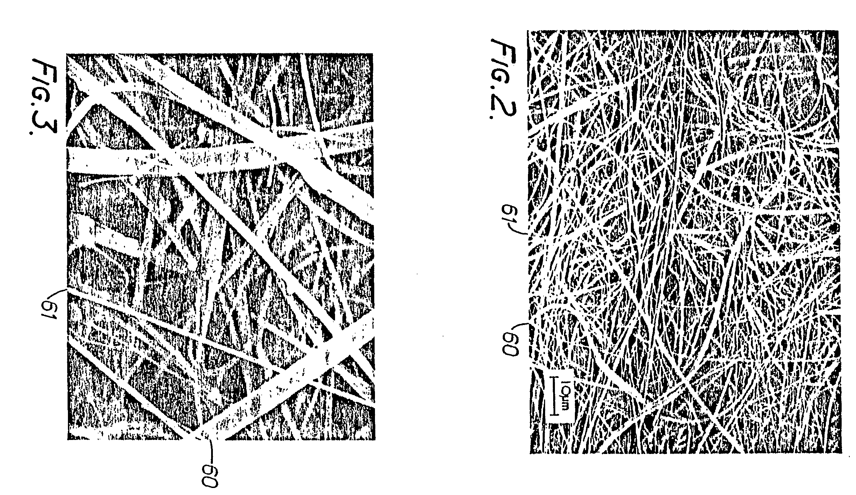

The separators are highly absorbent blotting paperlike short staple fibre glass matting about 1 mm thick, there being fibres 61 as thin as 0.2 microns and fibres 60 as thick as 2 microns in diameter, the average of the diameters of the fibres being about 0.5 microns. Figures 2 and 3 show this material at different magnifications, Figure 2 at 1000 fold and Figure 3 at 4000 fold.

It will be observed that the material whilst highly absorbent still has a very large amount of open space between the individual fibres. The material when tested for its wicking and electrolyte absorption capabilities as described above absorbs electrolyte so that the liquid has wicked up to a height of 20 cm after 2 hours and this is the steady state condition. This 20 cm of material absorbs 113% of its own dry volume of electrolyte, and this is its electrolyte absorption ratio.

The separator material weighs 200 grams/square metre and has a porosity of 90—95% as measured by mercury intrusion penetrometry. The density of the glass from which the fibres of the separator are made is 2.69 g/cm$^3$; the weight to fibre density is thus 74.

The arrangement shown in Figure 1 may be assembled by forming plate packs of interleaved pasted plates and separators and partitions in a jig and then inserting the complete assembly into the container, or the cell packs may be inserted sequentially into the container and electrolyte then added to the cells. The battery terminals are then connected to or formed on the plate straps and the lid sealed to the container.

In an alternative embodiment, which is not illustrated, the plastics bags extend up above the intercell connectors which pass through open topped slots formed in the material of the bag.

In a further embodiment, which is also not illustrated, the electrolyte creepage barrier is secured to the lid of the battery. This may be achieved by adhesive, but is preferably achieved by hot welding at the same time as the lid is welded to the case, and gives the cell packs additional stability which may be required for certain applications due to the absence of fixed intercell partitions.

In a still further embodiment, which is not illustrated the battery is inverted immediately after formation of the plate straps and the latter are dipped whilst still hot into a fluidised bed of epoxy resin powder incorporating a curing agent. The epoxy dust sticks to the hot surface of the plate straps and cures to form an impervious layer but does not stick to the other components of the battery which are cold. The impervious layer of epoxy resin acts as the electrolyte creepage barrier.

**Claims**

1. An electric storage battery having a compartment containing two cells separated from one another by an intercell partition, each cell comprising at least one positive electrode and at least one negative electrode separated from each other by separators of absorbent fibrous material and containing substantially no free unabsorbed electrolyte, the positive plates of one cell being connected to the negative plates of the other cell by an intercell connector which passes over or through the intercell partition and is not sealed thereto, in which the intercell connector is provided with an electrolyte creepage barrier which consists of a ring of plastics material moulded around the intercell connector.

2. An electric storage battery having a compartment containing two cells separated from one another by an intercell partition, each cell comprising at least one positive electrode and at least one negative electrode separated from each other by separators of absorbent fibrous material and containing substantially no free unabsorbed electrolyte, the positive plates of one cell being connected to the negative plates of the other cell by an intercell connector which passes over or through the intercell partition and is not sealed thereto, in which the intercell connector is provided with an electrolyte creepage barrier which consists of a film of organic material extending around the intercell connector.

3. A battery as claimed in Claim 1 in which the electrolyte creepage barrier is secured to the lid of the battery.

4. A battery as claimed in Claim 2 in which the organic material consists of epoxy resin.

5. A battery as claimed in any one of Claims 1 to 4 in which the electrodes and separators of each cell are within a respective plastics bag, the material of the plastics bags constituting the intercell partition.

6. A battery as claimed in any one of Claims 1 to 5 in which the amount of electrolyte in each cell is not sufficient to saturate the pores in the electrodes and in the separators.

7. A battery as claimed in any one of Claims 1 to 6 in which the electrolyte absorption ratio of the separator material is in excess of 100%.

8. A battery as claimed in any one of Claims 1 to 7 in which the separator material comprises microfine glass fibres.

**Revendications**

1. Batterie d'accumulateurs électriques comportant un compartiment contenant deux éléments séparés l'un de l'autre par une cloison entre éléments, chaque élément comportant au moins une électrode positive et au moins une électrode négative, séparées l'une de l'autre par des séparateurs constitués en un matériau fibreux absorbant et ne contenant essentiellement aucun électrolyte libre non absorbé, les plaques positives d'un élément étant raccordées aux plaques négatives de l'autre élément par un connecteur de liaison entre éléments qui passe par-dessus ou à travers la cloison entre éléments et n'est pas scellé à cette dernière, et dans laquelle le connecteur de liaison entre éléments est équipé d'un dispositif d'arrêt empêchant une fuite de l'électrolyte, qui est constitué par un anneau en matière plastique moulé autour du connecteur de liaison entre éléments.

2. Batterie d'accumulateurs électriques comportant un compartiment contenant deux éléments séparés l'un de l'autre par une cloison entre éléments, chaque élément comportant au moins une électrode positive et au moins une électrode négative, séparées l'une de l'autre par des séparateurs constitués en un élément fibreux absorbant et ne contenant essentiellement aucun électrolyte libre non absorbé, les plaques positives d'un élément étant raccordées aux plaques négatives de l'autre élément par un connecteur de liaison entre éléments qui passe par-dessus ou à travers la cloison entre éléments et n'est pas scellé à cette dernière, et dans laquelle le connecteur de liaison entre éléments est équipé d'un dispositif d'arrêt empêchant une fuite de l'électrolyte, qui est constitué par une pellicule de matériau organique s'étendant autour du connecteur de liaison entre éléments.

3. Batterie selon la revendication 1, dans laquelle le dispositif d'arrêt empêchant la fuite de l'électrolyte est fixé au couvercle de la batterie.

4. Batterie selon la revendication 2, dans laquelle le matériau organique est constitué par une résine époxy.

5. Batterie selon l'une quelconque des revendications 1 à 4, dans laquelle les électrodes et les séparateurs de chaque élément sont situés à l'intérieur de sacs plastiques respectifs, le matériau des sacs plastiques constituant la cloison entre éléments.

6. Batterie selon l'une quelconque des revendications 1 à 5, dans laquelle la quantité d'électrolyte dans chaque élément n'est pas suffisante pour saturer les pores présents dans les électrodes et dans les séparateurs.

7. Batterie selon l'une quelconque des revendications 1 à 6, dans laquelle le taux d'absorption de l'électrolyte par le matériau des séparateurs dépasse 100%.

8. Batterie selon l'une quelconque des revendications 1 à 7, dans laquelle le matériau des séparateurs comprend des fibres de verre possédant une finesse de l'ordre du micron.

**Patentansprüche**

1. Elektrische Sammlerbatterie mit einem Abteil, welches zwei durch eine Zwischenwand voneinander getrennte Zellen umfaßt, dadurch gekennzeichnet, daß jede Zelle wenigstens eine positive Elektrode und wenigstens eine negative Elektrode aufweist, welche durch Separatoren aus einem absorbierenden faserförmigen Material voneinander getrennt sind, daß jede Zelle im wesentlichen keinen freien, nicht absorbierten Elektrolyten enthält, daß die positiven Platten einer Zelle mit den negativen Platten der anderen Zelle über einen Zwischenzellen-Verbinder verbunden sind, welcher sich über oder durch die Zwischenwand erstreckt und daran nicht abgedichtet ist, und daß der Zwischenzellen-Verbinder mit einer Elektrolytkriechbarrier versehen ist, welche aus einem Ring aus Kunststoffmaterial besteht, der um den Zwischenzellen-Verbinder geformt ist.

2. Elektrische Sammlerbatterie mit einem Abteil, welches zwei durch eine Zwischenwand voneinander getrennte Zellen umfaßt, dadurch gekennzeichnet, daß jede Zelle wenigstens eine positive Elektrode und wenigstens eine negative Elektrode aufweist, die durch Separatoren aus einem absorbierenden faserförmigen Material voneinander getrennt sind, daß jede Zelle im wesentlichen keinen freien nicht absorbierten Elektrolyten enthält, daß die positiven Platten einer Zelle mit den negativen Platten der anderen Zelle über einen Zwischenzellen-Verbinder verbunden sind, der sich über oder durch die Zwischenwand erstreckt und daran nicht abgedichtet ist, und daß der Zwischenzellen-Verbinder mit einer Elektrolytkriechbarriere versehen ist, welche aus einem Film aus organischem Material besteht, der sich um den Zwischenzellen-Verbinder erstreckt.

3. Batterie nach Anspruch 1, dadurch gekennzeichnet, daß die Elektrolytkriechbarriere an dem Deckel der Batterie befestigt ist.

4. Batterie nach Anspruch 2, dadurch gekennzeichnet, daß das organische Material aus Epoxyharz besteht.

5. Batterie nach einem der Ansprüche 1 bis 4, dadurch gekennzeichnet, daß die Elektroden und die Separatoren einer jeden Zelle innerhalb eines entsprechenden Kunststoffbeutels angeordnet sind, und daß das Material der Kunststoffbeutel die Zwischenwand bildet.

6. Batterie nach einem der Ansprüche 1 bis 5, dadurch gekennzeichnet, daß die Menge des Elektrolyten in jeder Zelle nicht ausreichend ist, um die Poren in den Elektroden und in den Separatoren zu sättigen.

7. Batterie nach einem der Ansprüche 1 bis 6, dadurch gekennzeichnet, daß das Elektrolytabsorptionsverhältnis des Separatormaterials über 100% liegt.

8. Batterie nach einem der Ansprüche 1 bis 7, dadurch gekennzeichnet, daß das Separatormaterial mikrofeine Glasfasern umfaßt.

Fig.1.

FIG.2.

61    60

FIG.3.

60

61